# EUROPEAN PATENT APPLICATION

(11) **EP 2 268 001 A2**
(43) Date of publication of application: **29.12.2010**
(21) Application number: 10166429.0
(22) Date of filing: 18.06.2010
(51) Int. Cl.: H04N 5/232

(54) **Auto focusing apparatus and camera applying the same**

(30) Priority: 25.06.2009 KR 20090057211
(71) Applicant: Samsung Electronics Co., Ltd., Suwon-si, Gyeonggi-do (KR)
(72) Inventor: Kaihotsu, Wataru, Gyeonggi-do (KR); Chung, Chong-sam, Gyeonggi-do (KR); Shim, Jeong-hyun, Seoul (KR)
(74) Representative: Grünecker, Kinkeldey, Stockmair & Schwanhäusser Anwaltssozietät

(57) **Abstract**

Disclosed are an auto-focusing apparatus and a camera employing the same. The auto-focusing apparatus includes a pupil division unit including a plurality of holes of different sizes. The pencil of light ray entering through the photographing lens of the camera are divided into a plurality of pencils of light ray by being passed through the plurality of holes. The pupil division unit is arranged to focus the plurality of pencils of light ray onto an image capturing unit of the camera. The auto-focusing apparatus further includes a calculation unit that determines the focusing state of the camera based on combined images of the plurality of pencils of light ray captured by the image capturing unit.

## Description

### CROSS-REFERENCE TO RELATED APPLICATIONS

This application claims priority under 35 U.S.C. §119 from Korean Patent Application No. 10-2009-57211, filed on June 25, 2009, in the Korean Intellectual Property Office, the entire disclosure of which is incorporated herein by reference.

### TECHNICAL FIELD

The present disclosure relates generally to an auto-focusing apparatus and a camera employing the same, and more particularly, to an auto-focusing apparatus capable of carrying out automatic focusing using the photographing image sensor and a camera employing the same.

### BACKGROUND OF RELATED ART

Owing to the increasing and widespread use of the multimedia capable devices and of the Internet, allowing the storage of photographic images in the multimedia devices and/or on the Internet, for example, for sharing of such photographic images with others by uploading them on Internet blogs, there has been in the recent years a tremendous growth in the demand for cameras, which demand is likely to continue to increases in the future.

One feature desired by those casual camera users for the purposes of sharing the photographs over the Internet may be the auto-focusing (AF) function that automatically adjusts the focal point into focus. Manufactures thus offer a variety of camera products that include an AF apparatus of various configuration. Broadly speaking, in these AF apparatuses, a contrast method and/or a phase difference detection method for the determination of the amount of adjustment necessary for focusing have been generally employed.

The contrast method however cannot directly estimate deviation (degree of defocus) for the adjustment of the focal point, and requires several sequential measurements that requires a relatively longer period of time to control the focal point into focus.

In comparison, while it is possible to control the focal point in shorter time by using the phase difference detection method, a dedicated detection apparatus and additional optical system for the pencil of light ray examined for the focal point detection may become necessary, resulting in an increase in the cost and/or the size of the camera.

More recently, an AF apparatus adopting a pupil dividing method has been proposed. The pupil dividing method utilizes the photographing image sensor for perform the auto-focusing, and thus may not require an extra sensor dedicated for the auto-focusing, thus advantageously allowing an AF camera of a low cost and of smaller size.

However, unfortunately, those currently proposed pupil dividing methods may involve the division a pencil of light ray in time sequences, which is likely result in auto-focusing error due to the shaking of user's hand or for an inclined subject, or may involve the use of a micro lens, which may increase the cost, and which may also reduce the amount of image capturing data.

There is thus a need for an improved method of auto-focusing, including in particular the pupil dividing method of auto-focusing.

### SUMMARY OF THE DISCLOSURE

According to an aspect of the present disclosure, a camera may be provided to include a pupil division unit, an image capturing unit and a calculation unit. The pupil division unit may have a plurality of holes of different sizes through which a pencil of light ray entering a photographing lens passes to thereby become divided into a plurality of pencils of light ray. The image capturing unit may be configured to capture an image of a subject that enters through the photographing lens during a photographing operation, and may be configured to capture hole images corresponding to the plurality of pencils of light ray divided by the pupil division unit during a focusing operation. The calculation unit may be configured to receive combined image data corresponding to the hole images from the image capturing unit, and may be configured to determine a focusing state of the photographing lens based on the combined image data.

The focusing state may comprise a focusing direction along which the photographing lens is to be moved.

The pupil division unit may be driven by the same driving source as that of an apparatus for adjusting an amount of light allowed to reach the image capturing unit.

The pupil division unit may be arranged along with or integrally formed with an apparatus for adjusting an amount of light allowed to reach the image capturing unit.

The apparatus for adjusting the amount of light may comprise one of a shutter, an aperture and an optical filter of the camera.

The pupil division unit may be integrally formed with the shutter. The shutter may be configured to be in one of a shutter open state, a shutter close state and a pupil division state.

The pupil division unit may alternatively be integrally formed with the aperture. The aperture being configured to be closed when the plurality of holes of the pupil division unit are positioned in an optical path between the subject and the image capturing unit.

The optical filter may comprise a neutral density (ND) filter. The pupil division unit may alternatively be arranged adjacent the ND filter.

The plurality of holes of the pupil division unit may comprise a first hole and a second hole of different sizes allowing a first divided pencil of light ray and a second divided pencil of light ray to pass therethrough, respectively.

The calculation unit may be configured to determine a focusing direction according to respective locations of a first hole image corresponding to the first divided pencil of light ray and a second hole image corresponding to the second divided pencil of light ray.

According to another aspect of the present disclosure, an apparatus for performing auto-focusing of a camera may be provided to include a pupil division unit and a calculation unit. The pupil division unit may have a plurality of holes of different sizes through which a pencil of light ray entering a photographing lens passes to thereby become divided into a plurality of pencils of light ray, and may be configured to allow the plurality of pencils of light ray to be focused onto an image capturing unit of the camera. The calculation unit may be configured to determine a focusing state of the camera based on combined image data corresponding to hole images captured by the image capturing unit of the plurality of pencils of light ray.

The focusing state may comprise a focusing direction along which the photographing lens is to be moved. The calculation unit may be configured to determine the focusing direction based on respective amounts of light in one or more of the plurality of pencils of light ray.

The pupil division unit may be driven by the same driving source as that of an apparatus for adjusting an amount of light allowed to reach the image capturing unit.

The pupil division unit may be arranged along with or integrally formed with an apparatus for adjusting an amount of light allowed to reach the image capturing unit.

The apparatus for adjusting the amount of light may comprise one of a shutter, an aperture and an optical filter.

According to yet another aspect of the present disclosure, an apparatus for determining a focusing status of a photographing lens of a camera having an image sensor for capturing an image of a subject received through the photographing lens may be provided to include a moveable member and a focus status determining unit. The moveable member may have formed thereon a first hole of a first size and a second hole of a second size different from the first size, and may be moveable between at least a fist position and a second position. Each of the first and second holes may be in an optical path between the photographing lens and the image sensor when the moveable member is in the first position. At least one of the first and second holes may be away and out of the optical path when the moveable member is in the second position. The focus status determining unit may be configured to receive information relating to a first hole image and a second hole image corresponding to images captured by the image sensor respectively of a first light passing through the first hole of the moveable member and a second light passing through the second hole of the moveable member. The focus status determining unit may be configured to determine the focusing status of the photographing lens based on the received information relating to the first and second hole images.

The apparatus may further comprise a memory device having stored therein correlation data defining a correlating relationship between the received information relating to the first and second hole images and a defocus amount by which the photographing lens is to be moved in order to bring the photographing lens into focus.

The received information relating to the first and second hole images may comprise a distance between the first hole image and the second hole image.

The received information relating to the first and second hole images may comprise respective positions of the first hole image and the second hole image.

The received information relating to the first and second hole images may comprise respective amounts of light in the first light passing through the first hole of the moveable member and the second light passing through the second hole of the moveable member.

### BRIEF DESCRIPTION OF THE DRAWINGS

Various features and advantages of the disclosure will become more apparent by the following detailed description of several embodiments thereof with reference to the attached drawings, of which:

FIG. 1 illustrates a camera including an AF apparatus according to an embodiment of the present disclosure;

FIG. 2A illustrates an AF apparatus according to an embodiment of the present disclosure;

FIG. 2B illustrates the captured image varying according to the relative position of the image capturing unit according to an embodiment of the present disclosure;

FIGS. 3A to 3C illustrate a pupil division unit provided to operate along with a neutral density (ND) filter according to an embodiment;

FIGS. 4A to 4C illustrate a shutter integrally with which a pupil division unit is provided according to an embodiment of the present disclosure; and

FIGS. 5A to 5B illustrate an aperture integrally with which a pupil division unit is provided according to an embodiment of the present disclosure.

### DETAILED DESCRIPTION OF SEVERAL EMBODIMENTS

Reference will now be made in detail to the embodiment, examples of which are illustrated in the accompanying drawings, wherein like reference numerals refer to like elements throughout. While the embodiments are described with detailed construction and elements to assist in a comprehensive understanding of the various applications and advantages of the embodiments, it should be apparent however that the embodiments may be carried out without those specifically detailed particulars. Also, well-known functions or constructions will not be described in detail so as to avoid obscuring the description with unnecessary detail. It should be also noted that in the drawings, the dimensions of the features are not intended to be to true scale and may be exaggerated for the sake of allowing greater understanding.

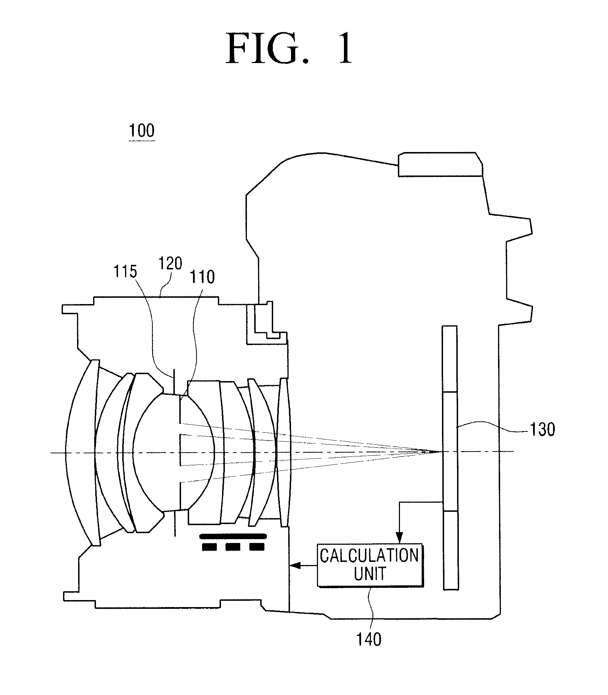

As shown in FIG. 1, a camera 100 employing an auto focusing apparatus according an embodiment of the present disclosure may include a pupil division unit 110, an aperture 115, a photographing lens 120 and an image capturing unit 130.

The pupil division unit 110 may divide the pencil of light ray entering the photographing lens 120 into two or more pencils of light ray (two pencils of light ray being shown in FIG. 1). To that end, the pupil division unit 110 may include two or more holes of different sizes. For purposes of illustrative convenience, an example of a pupil division unit 110 that divides the incoming pencil of light ray into two pencils of light ray as shown in FIG. 1 will be further described. The pupil division unit 110 shown in FIG. 1 is configured to allow only the two pencils of light ray having different sizes to pass therethrough.

The pupil division unit 110 may be positioned to divide the pencil of light ray entering the photographing lens 120 during the auto-focusing operation, and at other times may be positioned out of the optical path of the incoming pencil of light ray so as not to block the pencil of light ray entering the photographing lens 120.

The pupil division unit 110 may arranged so as to be driven by the same driving source that drives an apparatus for controlling the amount of light allowed enter the camera 100. For example, the pupil division unit 110 may be provided on or near the aperture 115, and may be driven by the same driving source as that of the aperture 115.

That is, the driving source (not shown) of the pupil division unit 110 may drive the pupil division unit 110 such that the pupil division unit 110 moves to the position of blocking the pencil of light ray passing through the photographing lens 120 during the auto-focusing operation, and such that, when the auto-focusing is not performed, the pupil division unit 110 moves to a position that does not block the pencil of light ray passing through the photographing lens 120.

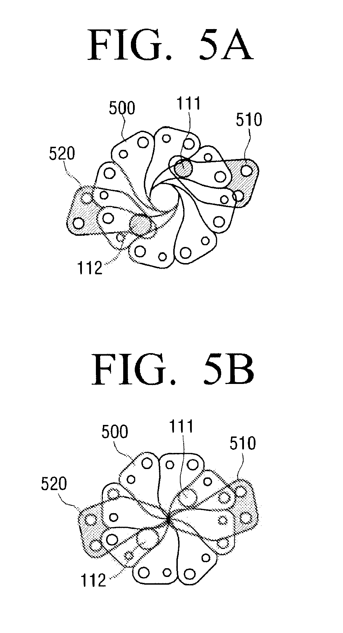

According to one or more embodiment of the present disclosure, the pupil division unit 110 may be arranged with, or integrally formed with, an apparatus for controlling the amount of light entering the camera. For example, the pupil division unit 110 may be integrally formed with the aperture 115 of the camera 100 as will be described in greater detail later with reference to FIGS. 5A and 5B.

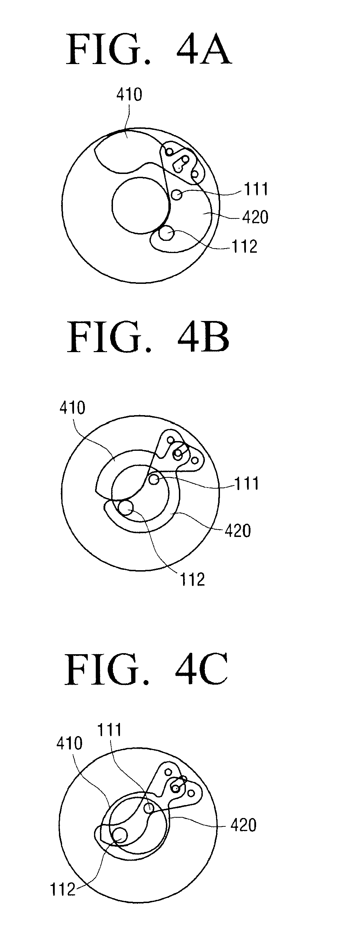

By way of another example, the pupil division unit 110 may be integrally formed with the shutter (not shown) of the camera 100 as will be described in greater detail later with reference to FIGS. 4A to 4C.

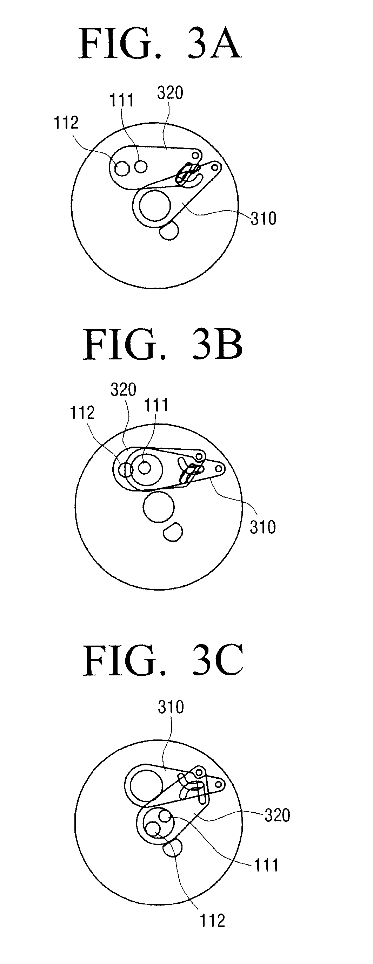

According to another embodiment, the pupil division unit 110 may be arranged along with a natural density (ND) filter (not shown) of the camera 100 as will be described in greater detail later with reference to FIGS. 3A to 3C.

The aperture 115 serves as the passage for the incident light, and, with an adjustment of its size, and may adjust the amount of incident light allowed into the camera 100. The aperture 115 may be, for example, located between the lenses of the photographing lens unit 120, and may allow the formation of the image in the lenses. That is, a virtual image formed by a lens located ahead of the aperture 115 (between a subject and the aperture 115) is referred to as an entrance pupil whereas a virtual image formed by a lens behind the aperture 115 (between the aperture 110 and an image capturing area) is referred to as an exit pupil. The exit pupil affects the brightness of a picture, may thus be considered an important factor in controlling the brightness.

The photographing lens 120 collects light from a subject, and forms an image on the image capturing unit 130. The photographing lens 120 may include, as illustrated in FIG. 1, a plurality of lenses each with its respective function that collectively form an optical group.

The photographing lens 120 may also include an AF driving unit (not shown). The AF driving unit may receive an auto-focusing information from a calculation unit 140, and may drive the photographing lens 120 to move into focus based on the auto-focusing information.

As illustrated in FIG. 1, according to an embodiment, the aperture 115 may be included in the photographing lens unit 120, and operates to adjust the amount of light passing through the photographing lens 120 and thus the depth of the image as well. That is, when the aperture 115 is open wider, more light is allowed pass through the photographing lens 120, resulting in a brighter picture. However, with the increased aperture diameter, the depth of the resulting picture may be low. On the other hand, when the aperture 115 is narrowed, while a darker picture may be obtained since a lesser amount light is allowed to pass through the photographing lens 110, as the aperture diameter decreases, the depth of the resulting picture may be high.

The image capturing unit 130 is where the image of the subject projected and sensed. In the case of a film camera, a film is laid on the image capturing unit 130. In the case of a digital camera, image sensors are arranged on the image capturing unit 130. The case of a digital camera will be explained by way of an example.

The image capturing unit 130 may have image sensors distributed thereon to be exposed to the light representative of the image of the subject. An image sensor used in a digital camera may be broadly classified into a charge coupled device (CCD) and a complementary metal oxide semi-conductor (CMOS). The two types of image sensors however operated according to substantially the same principle.

The CCD sensors are used in most of digital cameras due to their sensitivity even to weak light and high image quality. However, CCD sensors requires a complicated manufacturing process, and may have a higher cost.

On the other hand, the CMOS sensors have been used primarily as sensors for low price digital cameras as they can be manufactured at a low cost and by a relatively simpler process. However, CMOS sensors are gaining an increasing usage even in professional quality digital single-lens reflex (DSLR) cameras as the recent advancements in the image processing technologies made it possible to realize high quality image even with CMOS sensors.

The image capturing unit 130 may also capture the images of the plurality of pencils of light ray received from the pupil division unit 110 during an auto-focusing operation as the pupil division unit 110 is positioned to block the photographing lens 120 when the camera 100 performs the auto-focusing.

The image capturing unit 130 captures the image of the subject entering through the photographing lens 120 during a photographing operation, and captures the images entering through the pupil division unit 110 during an auto-focusing operation. To that end, the driving source (not shown) of the pupil division unit 110 may drive the pupil division unit 110 such that the pupil division unit 110 blocks the pencil of light ray passing through the photographing lens 120 during an auto-focusing operation. When not performing an auto-focusing operation, for example, during a photographing operation, the driving source may drive the pupil division unit 110 such that the pupil division unit 110 does not block the pencil of light ray passing through the photographing lens 120.

With the above described configuration, the camera 100 may be capable of performing the auto-focusing using the image capturing unit 130 without requiring an extra sensor dedicated for the auto-focusing.

The calculation unit 140 may be configured to calculates or otherwise determine the state of focus or the necessary focus adjustment based on the image data output by the image capturing unit 130 in response to the plurality of pencils of light ray passing through the pupil division unit 110. According to an embodiment of the present disclosure, the calculation unit 140 may calculate the focusing state of the camera 100 using, for example, the phase difference detection method.

For example, the pencils of light ray passing through the two holes of the pupil division unit 110 form two images on the image capturing unit 130. The image data output by the image capturing unit 130 represent the two images in combination. The calculation unit 140 may calculates the deviation between the two images to thereby determine the focusing state.

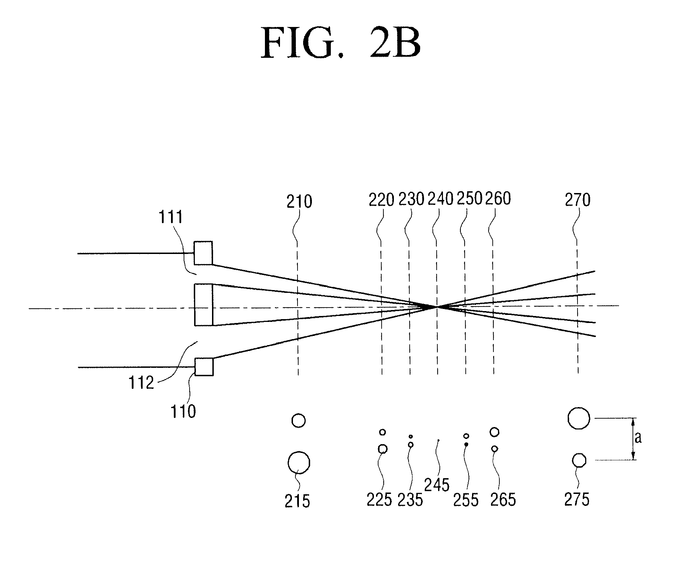

Assuming that the deviation between the two images is "a" (see FIG. 2B), and that the difference is along a direction, for example, along the x-axis direction. If the first image is f(x), the second image is *D* × *f*(x - *a*), where "D" is the aperture ratio of the two holes 111 and 112. The combined image of the two images is *f*(*x*) + *D* × *f*(*x* - *a*). That is, if the combined image and the deviation "a" are given, the uncombined original image f(x) can be calculated or otherwise obtained using the above relationship.

If the assumption with respect to the deviation "a" was correct, the correct image f(x) may be calculated. If however "a" was incorrectly estimated, the deduced image f(x) may also be incorrect. Through the above-described process, the calculation unit 140 may calculate the focusing state. The calculation unit 140 may also find the condition where the image f(x) is most similar to the real image, and may estimate the deviation "a" under that condition.

The calculation unit 140 may also calculate the focusing direction according to the relative locations of two images of the two pencils of light rays passing through the two holes 111 and 112 formed on the image capturing unit 130, and/or the relative amount of light detected by the image capturing unit 130. This aspect of the present disclosure will be further described in greater detail later with reference to FIG. 2B.

The calculation unit 140 may output a focusing control signal to a lens driving unit (not shown) of the photographing lens 120 to correctly focus based on the calculated focusing state. The lens driving unit may drive the photographing lens 120 to move to an in-focus position to complete the auto-focusing operation of the camera 100.

While a detailed structure of the calculation unit 140 is not depicted in the figures, as would be readily understood by those skilled in the art, the calculation unit 140 may be, e.g., a microprocessor, a microcontroller or the like, that may includes a CPU to execute one or more computer instructions to implement the various calculation operations herein described and/or may be a part of the main controller of the camera 100 that also controls the operations of other components of the camera 100, and to that end may further include a memory device, e.g., a Random Access Memory (RAM), Read-Only-Memory (ROM), a flesh memory, or the like, to store the one or more computer instructions.

As thus far described, a camera 100 including an auto-focusing apparatus according to one or more embodiments of the present disclosure is capable of performing the auto-focusing without the need for additional sensors, and can thus be produced at a low cost.

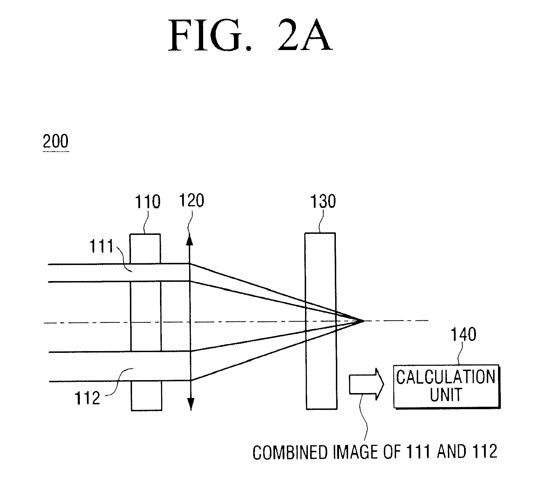

Referring now to FIGS. 2A and 2B, an auto-focusing apparatus 200 according to an several embodiments of the present disclosure will be described in greater detail

As shown in FIG. 2A, the auto focusing detection apparatus 200 may be realized by the provision of the pupil division unit 110, the photographing lens 120, the image capturing unit 130 and the calculation unit 140. The pupil division unit 110 may include a plurality of holes, for example, a first hole 111 and a second hole 112. The incident light is made to pass through the first hole 111 and the second hole 112 of the pupil division unit 110 so as to be divided into two pencils of light ray. A combined image of the two pencils of light ray passing through the first hole 111 and the second hole 112 may be formed on the image capturing unit 130, which outputs image data relating to the combined image to the calculation unit 140. For the sake of brevity, the detailed descriptions of those other functions and features already described in reference to FIG. 1 may not be repeated.

Referring to FIG. 2B, the pupil division unit 110 may include a first hole 111 and a second hole 112 that is larger in sixe than the first hole 111. If the image capturing unit 130 is located relative to the photographing lens unit 120 at a first position 210, the first image 215 may be formed on the image capturing unit 130. If the image capturing unit 130 is located at a second position 220, a second image 225 may be formed on the image capturing unit 130. If the image capturing unit 130 is located at a third position 230, a third image 235 may be formed on the image capturing unit 130.

The first position 210, the second position 220 and the third position 230 are each located ahead of or in the upstream of the focal plane 240. The first image 215, the second image 225 and the third image 235 formed at these positions have the larger image (the image of the pencil of light ray passing through the second hole 112) below the smaller image (the image of the pencil of light ray passing through the first hole 111). If the image of the pencil of light ray passing through the first hole 111 and the image of the pencil of light ray passing through the second hole 112 are formed on the image capturing unit 130 in the same positional relationship as the first hole 111 and the second hole 112, it can be determined that the image capturing unit 130 is located ahead of the focal plane 240.

If the image capturing unit 130 is located the fourth position, that is, at the focal plane 240, the image may be in focus, and may be expressed as substantially a dot, which is the fourth image 245.

As also shown in FIG. 2B, if the image capturing unit 130 is located at a fifth position 250, a fifth image 255 may be formed on the image capturing unit 130. If the image capturing unit 130 is located at a sixth position 260, a sixth image 265 may be formed on the image capturing unit 130. If the image capturing unit 130 is located at a seventh position 270, a seventh image 275 may be formed on the image capturing unit 130.

The fifth, the sixth and the seventh positions 250, 260, 270 are each behind or downstream of the focal plane 240. The fifth image 255, the sixth image 265 and the seventh image 275 formed at these positions have the larger image (the image of the pencil of light ray passing through the second hole 112) above the smaller image (the image of the pencil of light ray passing through the first hole 111). If the image of the pencil of light ray passing through the first hole 111 and the image of the pencil of light ray passing through the second hole 112 are formed in the reverse positional relationship of that of the first and second holes 111 and 112, the image capturing unit 130 is determined to be located behind the focal plane 240.

As the second hole 112 is larger than the first hole 111, the amount of light passing through the second hole 112 is larger than that passing through the first hole 111. Accordingly, the determination by the calculation unit 140 of whether the image capturing unit 130 is located ahead of or behind the focal plane 240 may additionally or alternatively be based on the relative location of the image with greater amount of light in relation to the other one of the two images formed on the image capturing device 130.

The calculation unit 140 may be capable of determining the current focusing state and the focusing direction in the manner above described, e.g., by utilizing the size difference between the first hole 111 and the second hole 112 of the pupil division unit 110.

The calculation unit 140 may further determine how far the image capturing unit 130 is away from the focal plane 240 using the deviation "a" between the two images. The deviation "a" and the distance between the image capturing unit 130 and the focal plane 240 have a directly proportional relationship, which relationship can also be determined. The calculation unit 140 is thus able to determine the distance between the image capturing unit 130 and the focal plane 240 from the deviation "a," by utilizing such proportional relationship.

In the manner described above, the calculation unit 140 may be capable of determining the focusing direction and the degree of defocus based on the deviation between the two images formed on the image capturing unit 130 and the respective locations of the two images, where the degree of defocus corresponds to the distance between the image capturing unit 130 and the focal surface 240.

It can be readily apparent from the above description that a camera 100 employing an AF apparatus according to one or more embodiments of the present disclosure is capable of performing the auto-focusing using the pupil division unit 110, which may be mounted in or operated in association with an apparatus for controlling the amount of light, the image capturing unit 130 and the calculation unit 140 without requiring a dedicated auto-focusing detection sensor.

Several examples of the pupil division unit 110, and of the provision of the same in or near an apparatus for adjusting an amount of light will be described with references to FIGS. 3A to 5B.

Shown in FIGS. 3A to 3C is a pupil division unit 320 according to an embodiment of the present disclosure that is arranged near a neutral density (ND) filter 310.

The ND filter 310 is a lens filter that is used to lower the brightness of the photographed scene. That is, the ND filter 310 reduces the amount of light incident thereupon uniformly over a wide wavelength band. If the adjustment of the aperture does not sufficiently adjust the brightness to the desired level, for example, because the subject is very bright, an ND filter 310 may be used to further adjust the brightness without further change in the depth of the picture.

The pupil division unit 320 may include a first hole 111 and a second hole 112, and may be arranged along with the ND filter 310. The pupil division unit 320 and the ND filter 310 may be movably driven by the same driving source. The driving source may drive the pupil division unit 320 and the ND filter 310 in such a manner that they are driven to their respective positions corresponding to the operational states illustrated in FIGS. 3A to 3C.

As illustrated in FIG. 3A, when the ND filter 310 is in use during a photographing operation, the ND filter 310 is located in an optical path and the pupil division unit 320 is driven, for example, upwardly and away from the light path.

As illustrated in FIG. 3B, when none of the ND filter 310 and the pupil division unit 320 are in use, both the ND filter 310 and the pupil division unit 320 may be positioned away and out of the optical path, for example, by driven by the driving source to move upwardly as depicted in the figure.

Shown in FIG. 3C is the pupil division unit 320 during the auto-focusing operation, where the pupil division unit 320 is moved into the position along the optical path such that both the first hole 111 and the second hole 112 are located in the optical path. As described, the pupil division unit 320 according to an embodiment of the present disclosure may be arranged to be driven along with the ND filter 310.

Illustrated in FIGS. 4A to 4C is a pupil division unit according to another embodiment that is formed integrally with the shutter of the camera 100. As shown in FIGS. 4A to 4C, a first hole and a second hole 112 corresponding to the pupil division unit are integrally formed with the lens shutter. The lens shutter may include a first shutter wing 410 and a second shutter wing 420. The first hole 111 and the second hole 112 may be formed, for example, on the second shutter wing 420.

According to an embodiment, the pupil division unit may be driven by the driving source (not shown) for the lens shutter in such a manner the first and second shutter wings 410 and 420 are variably positioned to correspond to the operational states illustrated in FIGS. 4A to 4C.

FIG. 4A illustrates the shutter open state in which the shutter is open for purposes of photographing, and which both the first and second shutter wings 410 and 420 are positioned away and out of the optical path as the shutter remains in the open state.

FIG. 4B illustrates the pupil division state of the lens shutter during an auto-focusing operation. During the auto-focusing operation, according to an embodiment, the first shutter wing 410 and the second shutter wing 420 may be driven to be engaged with each other such that, while the shutter may be substantially closed, as the second shutter wing 420 is positioned so that the first hole 111 and the second hole 112 are in the optical path, light is allowed to pass through the first hole 111 and the second hole 112. With the first and shutter wings 410 and 420 so positioned, the lens shutter performs the function of the pupil division unit 110 previously described.

Illustrated in FIG. 4C is the respective positions of the first and second shutter wings 410 and 420 in a shutter close state, in which the shutter is to be completely closed. As shown in FIG. 4C, the first and second shutter wings 410 and 420 may be driven further to be substantially completely engaged with each other such that the first and the second holes 111 and 112 are closed by the first shutter wing 410, placing the camera 100 in the shutter close state, in which the optical path is completely blocked.

As described above, the lens shutter with which the pupil division unit may be integrally formed may be driven to be in the shutter open state, the pupil division state, or in the shutter close state. Accordingly, the pupil division unit 110 may be integrally formed with the lens shutter, and can be utilized for performing the auto-focusing by operating the lens shutter as described above.

FIG. 5A illustrates another embodiment in which a pupil division unit is integrated into an aperture 500. According to an embodiment, as shown in FIG. 5A, a first hole 111 and a second hole 112, which correspond to a pupil division unit, are integrally formed with the aperture 500 that may include a first screen 510 and a second screen 520 for selectively screening the first hole 111 and the second hole 112.

According to an embodiment, the first screen 510 and the second screen 520 may be driven, for example, by the same driving source of the aperture 500, in such a manner the first screen 510 and the second screen 520 are driven to move between the respective positions corresponding to the operational states illustrated in FIGS. 5A to 5B.

As illustrated in FIG. 5A, in order to use the aperture 500 for the adjustment of brightness, the first screen 510 and the second screen 520 may be driven to positions respectively screening or blocking the first hole 111 and the second hole 112.

For the purpose of auto-focusing, as shown in FIG. 5B, the aperture 500 may be driven to be closed while the first screen 510 and the second screen 520 may be driven away from, so as not to block, the first hole 111 and the second hole 112, respectively, allowing light to pass through the first hole 111 and the second hole 112. In such configuration, the aperture 500 may perform the function of the pupil division unit 110 previously described.

As described above, the aperture 500 may be in an aperture use state or a pupil division state. Therefore, the pupil division unit 110 is integrally formed with and driven with the aperture 500.

As can be appreciated from the above descriptions, the pupil division unit according to several embodiments may be arranged along with or formed integrally with another component part of the camera, including for example, an ND filter 310, the lens shutter and the aperture 500. According to one or more aspects of the present invention, a camera employing a pupil division unit according to one or more embodiments of the present disclosure may be capable of performing the auto-focusing without requiring a dedicated auto-focusing sensor.

While in the above description, for the sake of illustrative convenience, examples of a pupil division unit having two holes were provided, it is to be understood that any two or more number of holes may be provided in a pupil division unit. Substantially similarly as described, the image capturing unit 140 may be configured to determine the focusing state based on the combined image data corresponding to the plurality of pencils of light ray passing through the pupil division unit 110 as captured by the image capturing unit 130. The calculation unit 140 may additionally determine the focusing direction based on the relative positions and/or the amount light of the images resulting from the plurality of pencils of light ray that have passed through the plural holes of difference sizes.

According to one or more aspects of the present disclosure, an auto-focusing apparatus may include a pupil division unit that includes a plurality of holes of different sizes to divide the pencil of light ray entering through a photographing lens into a plurality of pencils of light ray, and that is arranged to focus the plurality of pencils of light ray passing through the plurality of holes onto an image capturing unit of the camera. The auto-focusing apparatus may additionally include a calculation unit which calculates a focusing state based on combined image of the plurality of pencils of light ray passing through the pupil division unit captured by the image capturing unit. Aspects of the present disclosure thus provides a cost effective auto-focusing using a pupil dividing method.

As the holes of the pupil division unit 110 have different sizes according to one or more aspects of the present disclosure, the focusing direction can be determined from the information relating to the images of the pencils of light ray passing through the holes.

While the disclosure has been particularly shown and described with reference to several embodiments thereof with particular details, it will be apparent to one of ordinary skill in the art that various changes may be made to these embodiments without departing from the principles and spirit of the invention, the scope of which is defined in the following claims and their equivalents.

## Claims

1. A camera, comprising:
a pupil division unit having a plurality of holes of different sizes through which a pencil of light ray entering a photographing lens passes to thereby become divided into a plurality of pencils of light ray;
an image capturing unit configured to capture an image of a subject that enters through the photographing lens during a photographing operation, and configured to capture hole images corresponding to the plurality of pencils of light ray divided by the pupil division unit during a focusing operation; and
a calculation unit configured to receive combined image data corresponding to the hole images from the image capturing unit, and configured to determine a focusing state of the photographing lens based on the combined image data.

2. The camera of claim 1, wherein the calculation unit is configured to determine a focusing direction based on respective amounts of light in the plurality of pencils of light ray.

3. The camera of claim 1 or 2, wherein the pupil division unit is driven by the same driving source as that of an apparatus for adjusting an amount of light allowed to reach the image capturing unit.

4. The camera of any one of claims 1 to 3, wherein the pupil division unit is arranged along with or integrally formed with an apparatus for adjusting an amount of light allowed to reach the image capturing unit.

5. The camera of claim 3, wherein the apparatus for adjusting the amount of light comprises one of a shutter, an aperture and an optical filter of the camera.

6. The camera of claim 5, wherein the pupil division unit is integrally formed with the shutter, the shutter being configured to be in one of a shutter open state, a shutter close state and a pupil division state.

7. The camera of claim 5, wherein the pupil division unit is integrally formed with the aperture, the aperture being configured to be closed when the plurality of holes of the pupil division unit are positioned in an optical path between the subject and the image capturing unit.

8. The camera of claim 5, wherein the optical filter comprises a neutral density (ND) filter, the pupil division unit being arranged adjacent the ND filter.

9. The camera of any one of claims 1 to 8, wherein the pupil division unit comprises two holes of different sizes.

10. The camera of claim 9, wherein the two holes are a first hole and a second hole, and the calculation unit is configured to determine a focusing direction according to respective locations of images captured by the image sensing unit of respective lights passing through the first hole and the second hole.

11. An apparatus for performing auto-focusing of a camera, the auto-focusing apparatus comprising a pupil division unit and a calculation unit which are claimed in any one of claims 1 to 10.
